# EUROPEAN PATENT APPLICATION

(11) **EP 1 647 709 A2**
(43) Date of publication of application: **19.04.2006**
(21) Application number: 05075728.5
(22) Date of filing: 30.03.2005
(51) Int. Cl.: F03G 7/04, F24J 3/08, F02C 1/05

(54) **Power system using natural temperature differences**

(30) Priority: 07.01.2005 NL 1027974; 06.12.2004 NL 1027668; 18.10.2004 NL 1027280
(71) Applicant: Croughs, Erwin, 3021 DC Rotterdam (NL)
(72) Inventor: Croughs, Erwin, 3021 DC Rotterdam (NL)

(57) **Abstract**

An energy system using cold or liquid air to generate economical and sustainable energy for the grid, heating and transportation, thereby clearing and cooling the atmosphere so as to reverse the greenhouse effects. Ice cold liquid air or Nitrogen is injected into a low grade heat source where it heats up comes back under high pressure and moderate temperature and upon expansion energy is extracted and converted into electricity; the air turns liquid again and goes back into the heat source. Electricity goes to power stations across the nation that could covert part of it by compression into clear liquid air, liquid carbon dioxide and heat. Pollutants and carbon dioxide are stored or reused and the heat is used for peak storage or to warm the houses and liquid air or Nitrogen is pumped into transportation means with air motor. Upon power demand the air is heated by sun, air, water or CHP and expands, drives the vehicle or ship and comes out expanded and ice cold; exhaust is fresh cold and cleared air, thus reversing global warming and pollution.

## Description

### Field of invention

Our oceans only need a few degrees of temperature rise to cause a string of ecological catastrophes and our air already kills us by the thousands and counting. Pollution has increased many times over whereas fossil reserves are dwindling ever faster. Without reversal of this process, the price tag of worldwide dike fortifications, by drought or floods devastated living and agricultural area's, elderly and infant deaths, forest fires, extinct animals, lung diseases, mass evacuations and aid to disaster area's, will be too high and still we don't even talk about suffocation by atmosphere, global dimming, stopping of the conveyer belt or the melting of the methane that now still is frozen on the ocean beds. Even if tomorrow we start clearing and cooling down the atmosphere, we're going to (keep) spending a lot of money to battling the effects of global warming and pollution and still it is the question if we ever reach the needed order of magnitude. Fossil fuels are being thrown in the air on a grand scale, we see the north pole melt, earth being smothered, the ozone layer disintegrate, oil wars that give the world hate, death, agony and terrorism. Every day anew our addiction grows to our ever faster declining fossil treasures. Because of the ever increasing amount of cars on the market, fuel usage will increase the following years and then again double due to extra traffic jams. High electricity peak demand will also increase along with the worlds population en industry will have to produce more (as long as they can) to compete in the economy. Transport of oil, gas, electricity and fuel alone will cost billions extra. During the past century half of our fossil supply, build up in many millions of years of evolution was burnt and air pollution has multiplied many times over, already killing thousands a year. Emission of greenhouse gasses up till 1990 has given us the need to raise our water protection works and as a solution for the problem the world wants to go back to that very level! Unfortunately no prior art has been found for systems that tried to handle this but still we examined works that headed in that direction. With this in mind an energy system is attempted that, using ice cold air as agent in generation, storage and use, not only tries to minimize energy consumption and pollution but also moves us into the sustainable resources and in the process, cold air is used to cool down and clear the atmosphere.

### Discussion of prior art

For a solution we knew we had to answer back with the exact opposite of the continuously ongoing burning process; a "negative" energy or "cool down" process. To sustain this process we looked to the sun and deep down in the earth. Even though in investigated patents not much is found about energy systems that reverse the greenhouse effects, earlier patents have tried to generate sustainable energy and reduce the problem of emission by electric cars but those can take little power on board and electricity comes from fossil fuels without efforts of clearing the air and the problem of storing larger quantities is not really solved. 1)We looked into geothermal energy as in the earth crust is enough clean and dependable energy to provide the world 1000 times over and there is more than enough storage capacity as well, making it the first place to look for a solution. 2)Then we investigated the different storage solutions. 3)And we'll discuss the economical consumption of energy, more specifically in the transport sector as that counts for the highest greenhouse gas emission.

### Earth Heat

Geothermic generation(HU 197063) is an option as the amount of energy in the crust is thousands times more than whatever we need but mainly the heat supply is used and it's not very profitable if higher temperatures need to be gotten from deeper layers. Other patents like US 4644750 also encounter this problem as here a closed end of the down hole tube is used for bigger heat exchange but because of the great distances too much energy is needed for transfer and compensation of losses. However, geothermic heat is one of the most promising renewable energy sources; always and everywhere, constant, reliable predictable, and abundantly present. Systems that inject a fluid which evaporates when heated up by geothermic heat, thus bringing higher temperature and heat to the surface, will generate electricity and more according to the geothermic temperature being higher above the boiling point of the fluid, but fact remains that a small temperature difference won't give too big a difference in pressure. At first glance it doesn't make sense to just inject cold fluid and even if the rock formation is able to hold it, consideration stays that it costs money to cool down the fluid and that no higher temperature or pressure will result. US 4642987 has greater surface to exchange heat but here too minimal temperature and pressure differences are used. The heat carriers used, like Propane, Butane, Ammoniac, etc. have a boiling point around -40° C to 0° C. These fluids evaporate easily and expand if they are heated and will generate electricity.

Unfortunately it's no use to further cool them down because as liquid they will not carry the difference in pressure whereas we need a great temperature difference in the gaseous phase to work with lower source temperatures or get higher yields. Also the use of these substances as primary carrier has the problem that it needs to be replenished because part of it stays in and even pollutes the ground. And as secondary carrier it can't be cooled down too much without freezing the water which is almost always used as primary carrier, it being clean and cheap. These systems can't, because of the use of some kind of distribution device through which fluid trickles to evaporate, be gotten under high pressure because than the fluid wouldn't evaporate anymore. So we need direct high pressure injection that still get evaporation even though the system is under high pressure.

### Energy Storage

CAES (US5537822) is a first step in the right direction of storing energy but still needs fossil fuels and only takes care of distribution of electricity, thus not yet providing a sustainable solution. Except hydropower other patents don't really provide green storage in big quantities nor sustainable storage facilities for vehicles.

### Energy Consumption

Cars have great greenhouse gas emission and need great attention. Hybrid patents are promising and are a step closer but still fuel usage is high and again no efforts to cool and clear the atmosphere. Prius does really good with 1:22 but that is not nearly what we need. WO 0071375 comes close but has no electro motors in the wheels making the net results somewhat low. Also it has no heating of expanded air and again new expansion causing quite some energy to be lost, making the system not really energy effective. Actually the only car that emits air cleaner and cooler than it consumes and thus offers an opportunity to reverse the global warming is the MDI with FR 2769949 and subsequent patents using and a start has been made. Using crankshaft, differentials, gearbox, cylinders, transmission, clutch, etc, it still has a lot of friction and weight and thus energy losses. Apart from the motor not optimally being used, it has no constant rpm as is the case with a turbine driven generator. Especially at higher rpm(up to 4000) the energy rich air can't come into the cylinder fast enough for complete power transfer to the piston which already goes down by the turning crankshaft before air pressure builds up and transfers to the piston. So part of the pressured air will expand and be consumed without complete utilisation of its power.

After expansion the air also can't completely warm up and regain pressure before it goes back in the next cylinder because the ambient air can't heat up the bigger air flow fast enough before next expansion. At lower rpm and smaller volume of high pressure airflow, the expansion can be used completely because the piston stays longer in its top position and the air has enough to time to come in to the cylinder and build up pressure to transfer to the piston. Of course, also for the ambient air it's easier to heat up and pressure up the smaller and slower airflow. As well this principle as the loss of expansion pressure at higher rpm and the friction in the energy transfer part to the wheels can explain the relative small radius at higher speeds and the relative huge radius at lower speeds.

It's not very obvious to think of solar-energy because it's diffuse and continuity can't be guaranteed which is true but in combination with cold air it's able to up the pressure and becomes an option. An MDI motor can't be converted into a continuous rpm engine and will have gears, drive train, heat and friction loss, etc. However, as a solution, MDI has installed a fuel engine that supplies the energy for higher speeds and pumps up air for zero emission during city use. The ecological disadvantage is that no use is made of free solar energy, emission exhaust enters the atmosphere and there is good but no optimum efficiency, however, as a net result it clears more air than it pollutes and through zero emission in urban area's, cities are being cleaned up. Time to improve on this one!

### Discussion of the present invention

In answer to the doom scenario the AGE technology© is born by this writing.

AGE is short for Anti Greenhouse Energy and the definition of AGE Technology**ⓒ** is:
"Application of technology pertaining to generation, storage and conversion of sustainable energy in a way so as to reverse the greenhouse effect "

It can further be defined: "Extracting sustainable energy from earth and atmosphere using a low energy agent like cold or liquefied gas for generation, storage and conversion of energy to supply effective power while clearing the atmosphere"

### GEOTHERMAL ENERGY

In generation of earth energy the problem that needs to be conquered is the low geothermic temperature which still poses economical barriers. As we can't get higher temperatures out of earth we'll have to start with lower temperatures in the gaseous phase because everybody knows that yield depends on the ratio of ingoing and outgoing temperatures of an expansion/generator system. To solve this we'll have to create as high as possible a temperature difference above the boiling point of the energy carrier and preferably with the least possible friction between the molecules. Using a medium like f.i. nitrogen, staying gaseous while being cooled down, the pressure decrease follows the lowering of temperature, same as other substances with low boiling point like 02, Air, H2, etc. which also can be cooled down a go through bigger temperature and comparable pressure difference from their relative low boiling points up to the temperature in the geothermic area, thus allowing enough energy to be taken in and rendered back.

For example; if butane would evaporate at 0° C, then cold fluid butane that gets heated to 80° C will go through a temperature increase of 80 degrees and equal pressure difference but everything under 0° C will hardly be seen in the pressure difference. Liquid nitrogen of -160° C will, when heated, shows a comparable pressure increase, so if it's heated to 80° C the pressure difference will follow the complete bracket and not just the part above 0° C. In this case it's useful to strongly cool it down, especially if it happens automatically at expansion; it won't cost too much; at the most a control device to monitor optimum temperature. This way the pressure difference is increased; instead of from 0° C to 80° C it's from -150° C to 80° C. And the liquid nitrogen that needs to be discarded after energy has been extracted can nicely be put back in the heat source. Due to the low boiling point the liquid nitrogen will evaporate even though under high pressure. Not all strata are suitable to inject frozen liquid gas under very high pressure, so places were looked for that could definitely hold it and that's of course there where gas had already been stuck for ages under high temperature and pressure in the ground; old oil and gas wells. Then there is the problem of pollution because if gas goes cleanly in the ground it'll come up mixed with all elements from the soil and will need to be filtered. However, using a binary cycle this can be solved quite easily as the gas from the geothermal area only passes a heat exchanger to give up its energy and returns back into the ground, leaving the secondary gas clean.

Only the heat exchanger will need a thorough cleaning once in a while but the turbines, being driven by dry and clean gas stay in excellent condition. The injection of ice cold gas in an area can't be done in one time so that would need to be taken into account. The injector pipe of the liquid gas is first very well insulated and after that it will go over into a long high quality heat exchange pipe which passes a large part of the area and preferably through a lower part containing oil, as water would freeze and hinder heat transfer, thus heating up the gas before final injection higher up in the gas containing part of the area. The injecting end should be as far as possible at the opposite end of the point where the gas returns upward allowing the injected gas to heat up fully and take a lot of energy back up. Of course it's impossible at installation to just inject very cold gas in a geothermal area and needs to be started at higher temperatures and lower pressures after which volume and pressure can be increased and temperature lowered until the heat restoring capability of the area is reached and the amount of cold liquid injected air per minute can easily be raised by earth to the optimum temperature.

Then there is the heating of the secondary gas; cold gas will take heat and expand but after work is produced and the gas is back again at starting pressure, it could be that it's not yet completely liquid. Even though we calibrate the pressure in the geothermal area so that the liquid injected gas gets such a pressure at existing temperatures that after work and expansion it returns liquid, we could install an extra cooling/compression cycle f. i. a Siemens Cycle or another heat exchanger to reach the exact injection temperature and pressure.

The good part of extracting geothermic energy this way is that cost stay in range as we can use a borehole of a gas well that wasn't profitable or use an old well and pump it up it with air or we can reactivate old oil fields almost without costs. There are so many possibilities for application that equipment can be made in serial production and a new industry arises with a lot of work and low investments to the benefit of the environment.

### ENERGY STORAGE

There are several ways to store power; we can keep it underground until we need it. Of course, during peak hours the volume of cold gas injection can be increased to deliver extra electricity but than the geothermal temperature will decrease and we'll have to slow down during off hours to restore temperature in the area for the next day. Also, the amount of injected liquid can be level 24/7 as the amount of energy from the earth per day is always the same and it doesn't really matter at which time of the day we extract it as long as we don't use more energy than what can be restored by the earth. So this generation facility has an automatic storage/peak function that can even be twice its generating capacity, that is if next day geothermal temperature is restored to normal. We can also use surplus during off hours to drive compressors at remote locations which take in and compress air. During compression very high temperatures come free and those are stored separately. Also the air will need to be filtered before taken in to prevent the compressors from being damaged and so clean air under high pressure is stored which can be supplied to vehicles powered by an air motor. This takes care of the transport problem of heat and fuel. The heat that comes free during compression is supplied locally on demand to the city heating system, converted back to peak electricity or stored for winter time. This way a geothermic generator can produce optimally 24 hours a day, enough for electrical peak supply and surplus during off hours is used for heat and "fuel". This way we have financed automatically local storage and transport of fuel and heat supply.

The apparent disadvantage of heat and pressure storage is that it takes to about 10 times the volume of fossil storage but that's overcompensated by certainty of geothermic generation; at no time a greater stored supply than for 12 hours is needed because after each peak a night of low demand will follow while geothermic generation will continue without being influenced by sun, rain, melt water, wind, season, (political) climate, etc. If you look at the enormous oil storage that needs to be constructed to guarantee supply, the few containers or natural spaces for storing heat and air pressure(CAES) are minute. The past 50 years very few geothermic plants have been exhausted (and only then when the installed capacity extracts water and heat faster than earth can supply) while every day the same amount of energy is generated, what is not the case for other renewable and (sometimes) fossil energy sources. The entire process cools and cleans the atmosphere because exhausts of the cars emit cool filtered air just like in case high pressured air generated during off hours, is used for peak electricity supply.

Finally this is a unique possibility to generate huge quantities of geothermal energy while city heating, the grid and transport can be provided on demand; everything sustainable and at the same time clearing the air and cooling down the atmosphere to reverse global warming. As a matter of fact we sit warm at home by heat separated from air that is now cooled down and in 50 years we'll have to find a solution to the (deep)freeze effect and carbon depleted air. But until then we'll more than just need this system. It can even be extended to solar collectors that use the same system with the sun as energy source that heats a collector with tubes through which gas flows which at expansion gives us work, cools down and is in liquid form injected again in the collector.

### CONVERSION

Generation and storage being covered we now need to take a look at the effective use and conversion of energy for vehicles and designed the AGE Motor©, again using ice cold or liquid air to generate, store and convert energy and without energy consumers like pistons, cylinders, gears, clutches, crankshaft, differentials, start engine, cooling, etc. so that it at least can have some chance of efficiency. It has an air motor that drives a generator which powers a battery that controls an electromotor in the wheels causing forward thrust. Secondly, a computer takes care of optimum rpm for variable generator and air motor so as to prevent efficiency losses and provide optimum heat exchange. 3) the gas turbine only runs when heat supply is low and only at optimum rpm so as to consume little gas at highest efficiency. 4) during the ride as well as parked, solar light is collected and stored to supply extra heat and pressure to expanded cold air. 5) when greater power demand on the highway quickly drains the stored solar heat, the turbine's waste heat is used by the cold air, thus making a CHP. 6)the storage capacity of compressed air is increased by storing ice cold or liquid air. 7) Day and night heat from the atmosphere is extracted by the solar roof as well as by the plate. 8) Heat extraction capacity is increased by solar roof, radiator, plate, and cold air in tank. 9) Solar energy collection capacity is increased using the air tank as well as induction heating for higher temperatures 10) And, last but not least, the motor in wheel can regenerate braking energy for driving power.

In the following discourse all values of quantities, costs, temperatures, etc. are approximations to get a proper understanding of principle, general range of operation and interrelated action; they are by no means set values.

The AGE Motor© mainly runs on ambient heat, solar heat or CHP and that is not only a lot cleaner than whichever form of fuel, it's also generated in a sustainable way at the place where it's needed; in the vehicle. The carrier or catalyser, liquid air, can be generated and transported anywhere in the world at low costs. The huge ecological advantage of compression is that air needs to be thoroughly filtered to keep impurities out of the compressor and tank and thus, at expansion during the ride, clean cool air will come free into the atmosphere. The little energy that is used for compression is relative clean because it's generated during the night and the electric power plants will run more effectively this way, especially if the exhaust from the plant is compressed so that heat and pollution are taken out and sold or stored under ground. Tremendous ecological problems are solved relatively easily as waste products of power plants then consist only of solid or liquid pollutants, useful heat and clean compressed air, possibly separated at no extra costs into CO₂, N₂, O₂ etc. A full tank of gasoline in Europe now costs more than €60,- and in the future a lot more but a 3001. compressed air tank costs only €2,50 to just give an idea of the possible savings. The most difficult property of compressed air is the huge temperature difference at expansion but that is exactly what AGE Technology**ⓒ** uses. The air in the tank is very cold but passing the radiator heats up considerably. It can also pass a plate below the vehicle that during the ride has a continuous flow of ambient air to warm the cold pressed air. After that it's pressured up further by the heat storage reservoirs, fed by solar and CHP. The roof and hood that during daytime function as solar collector extract heat(light) from the atmosphere, also when parked. The liquid(alcohol) that flows through the collector takes the solar heat to a tank via a heat pump. In the heat storage tank is oil as that is easy to obtain and it can store a lot of heat. On the highway the solar energy storage is not sufficient to heat the expanded air and the gas turbine will take over, storing its waste heat in the collector to be used later when the air motor is in action, thus making a beautiful CHP turbine. During the night the solar collector as well as the plate under the vehicle heat the ice cold air in the storage tanks thus increasing pressure and when it gets above 300 bar the surplus is then discharged via the air motor/generator which fills up the battery and then powers the electrical heaters in the heat storage reservoirs, thus increasing stored temperatures to be used for next power demand.

The AGE motor© is a real hybrid and has several energy sources; a solar roof and hood, a heat exchange plate under the vehicle, compressed or liquid air, batteries, recuperated brake energy, ambient air heat, heat storage reservoir and gas turbine with CHP what is unique for a vehicle; the waste heat is recuperated and stored for later heating of compressed air.

The well insulated cabin has an air ventilation system with a tube in a tube that heats the fresh incoming outside air with the warm outgoing air while an electrical or central heater controls the temperature and not a lot of energy is lost due to the good insulation and perfect heat exchanger. The cold expanded air from the motor is an ideal air conditioner. A computer calculates the optimum way to charge the batteries and stops charging when 95% is filled so that brake energy still can be added. When the battery is lower than 75% it starts charging. If a lot of heat is available it'll charge faster, whereas if the temperature in the heat storage decreases charging will be done slower to give the expanded air time to heat up before it enters the next motor. During liquid air intake electricity can be automatically supplied to fill up the batteries and bring the heat storage up to high temperatures using an induction heating element. Of course this will not be needed if the sun or gas turbine have already brought the reservoir up to desirable temperatures. The sun works especially when the car has been parked for a while; the heat of the day is stored at good temperatures using a heat pump and at night ambient heat pressurizes cold air in the tanks. This is an ideal situation for the daily work traffic because those distances match pretty much the amount of energy that can be collected per 24 hours and the gas turbine will not be needed, thus making a zero emission. When the cold pressed air storage tank is heated and tops 310 bar a pressure valve will automatically open and air will flow to the air motor, thus automatically charging the battery and in case the battery is full the heat storage reservoirs will be charged by the induction elements. The motor can have one heat storage reservoir that collects solar heat, electrical heat and the waste heat from the gas motor but also two reservoirs are possible to store solar heat and waste heat at different temperatures to optimise energy utilisation.

### Description AGE Technology

### GENERATION AND STORAGE

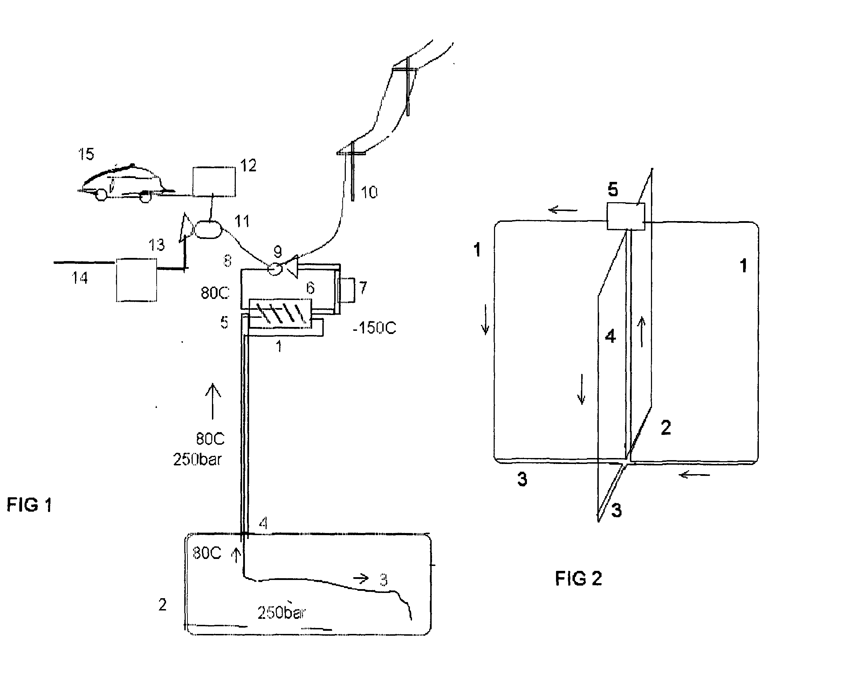

The source (fig 1)is a closed underground geothermal area(2) containing gas of high pressure. Cold liquid gas of same composition is pumped through a small insulated tube(1) which is constructed directly in the ground or through an existing pipe into the underground area. Second part of the small tube passes without insulation rock layers above and aside the area and through the oil layers underneath the gaseous area to end(3) as far as possible from the point of return(4), the gas thus being maximally warmed before it leaves the area. The area being under high pressure and containing heat, the injected gas will also get high pressure and temperature. At the end of the bigger tube(4) the gas goes up and comes under high pressure and temperature in a heat exchanger(5) where it gives its energy to another similar gas(6) via a binary cycle(8). The secondary gas was very cold and liquid before entering the exchanger, so the primary gas will leave the exchanger cold and liquid when injected in the small tube(1) to return downwards. After heating the secondary gas will have a temperature around that of the geothermic area and thus can't stay liquid and will now have a corresponding high pressure and can drive a turbine/generator set up(9) that feeds the net(10). After expansion it probably may need to be cooled a bit further, f.i. by a Siemens Cycle(7) so as to return liquid into the heat exchanger. At night in the off hours, less electricity will be needed but if energy supply from earth stays constant the generator drives a (remote) compressor 11) that takes air from the environ, filters, cools, and stores it under high pressure(12) to be supplied to vehicles(15) with air motor. The heat extracted from compression at night is stored in heat storage(13) and in combination with compressed air or water can generate peak electricity during daytime and possibly using CHP supply the city heating(14) or it can be stored for winter.

It's also possible, using modem drilling techniques (fig2) to construct a closed piping system(2) to depths of about 3 km and pump liquid gas through a small insulated pipe(1) into a bigger frost resistant pipe(3) where it gets geothermal energy and is returned(4) under high pressure to the plant(5) where it drives a turbine/generator set up. During construction low temperatures should be taken into account and pipes should be cold resistant to prevent fissures. A binary cycle could be used but is not necessary as the gas stays clean in the closed system. The plant can be extended in all directions, as many kilometres as desired in order to enable earth to always supply enough heat, even if very great volumes of cold gas are being injected. The geothermal temperature doesn't need to be higher than 70° C -100° C to still get a temperature difference of more than 150 degrees above the boiling point of the gas. It can be applied virtually everywhere because it doesn't depend on (natural) reservoirs, (old) oil or gas wells, volcanic grounds or very deep area's. A normal geothermal energy system could sink the soil but this one hardens it as the soil will freeze around the injection points and this one also has no waste water. In this system too the same ways of energy storage as described earlier can be applied; heat and high pressure or storage in the form of liquid gas and geothermal heat.

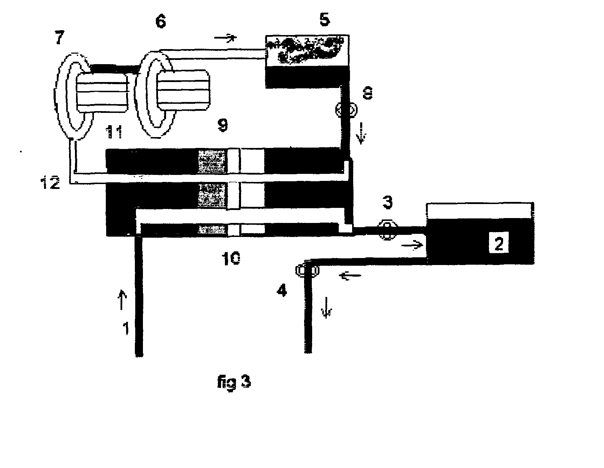

The exchange process(fig3) has a heat exchanger(10) consisting of several segmented and insulated parts with a heat transfer agent through which hot pressured air(1) coming from the geothermal area will give its heat via the agent to a binary gas(8) which is ice cold and fluid, thus being warmed and expanded into a gaseous state at similar pressure and temperature(12) as the incoming air. This gas enters turbine(7) that drives generator (11). Then it exits the turbine and could be warmed up by ambient air or energy from flowing water before it enters the next turbine(6) that drives generator(9). This cycle could be repeated several times until the pressure and temperature are such that the gas on expansion(5) will become fluid so that it can enter the heat exchanger again. The primary air from the geothermal area will exit the exchanger ice cold and fluid, pumped(3) into fluid gas storage reservoir(2) from where it could be pumped back(4) into the geothermal area. Another way to store energy is by not immediately extracting all the air that's being pumped down into the geothermal area but wait till you need it. During peak demand extra air can be extracted by increasing the flow and turbine action and it can be kept in liquid form in storage(2) to be pumped down during the next 24 hours or it can be pumped down directly, using the next 24 hours to let the temperature restore itself.

### AGE IN TRANSPORT

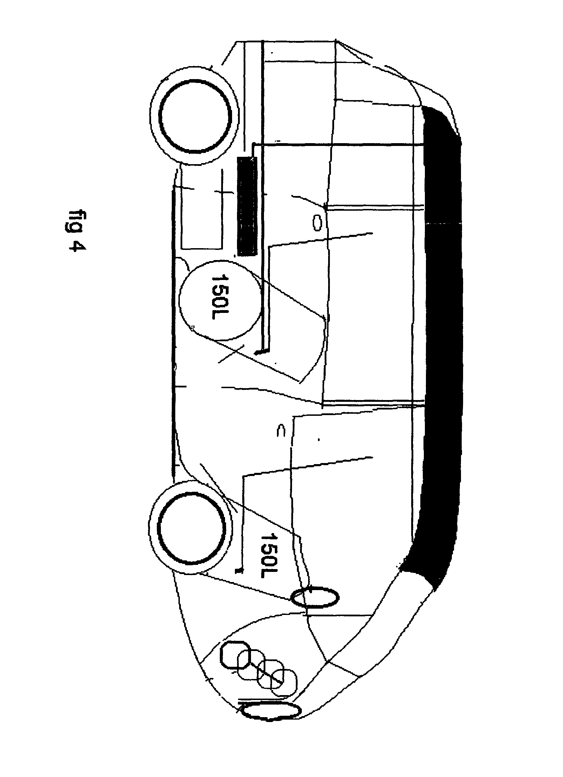

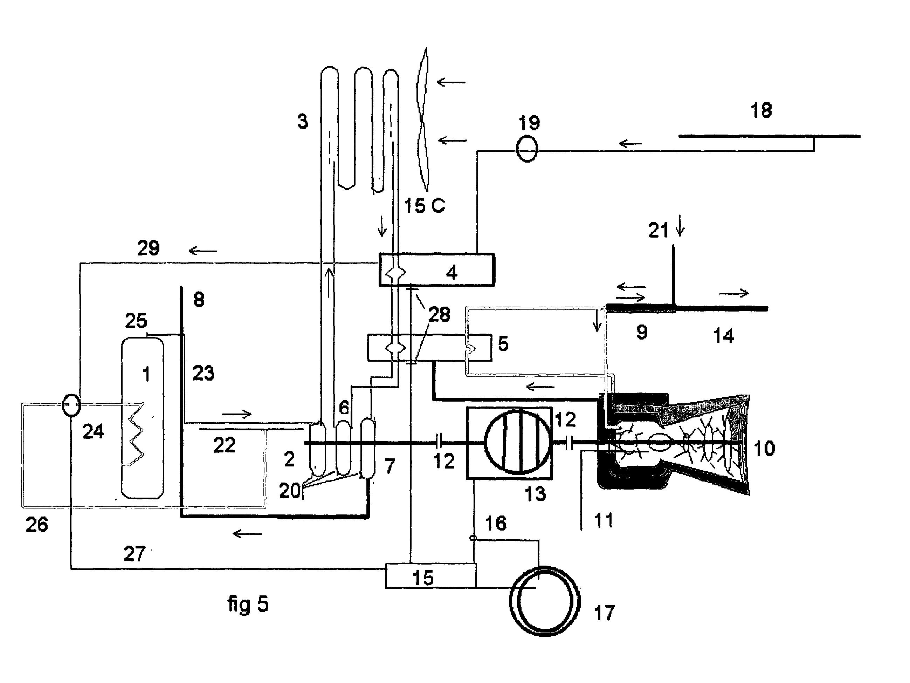

The vehicle (fig4) equipped with an AGE Motor© (fig5) has energy stored in the form of heat and liquid or compressed air in the tank(1) which goes from pressure valve (25) via heat exchanger(23) passing heat exchanger(22) under the vehicle to air motor(2) that drives generator(13) which powers battery(15) that stores it. Upon demand power is given to wheel motor( 17). The heat storage reservoir(4) is fed by solar collector( 18) via heat pump(19) and exhaust heat from gas turbine(10) goes to reservoir(5); in a smaller engine only one reservoir will be used. The air that drives the air motor and expands gets cold and needs to be heated, first by ambient air in radiator(3), then by the first heat reservoir(4) and then by the second heat reservoir(5) after which it will be hot and with high pressure it'll go in the second air motor(6) that also drives the generator. It's also possible to have three(7) air motors or more used in the same way and the air will leave the last motor cold at low pressure in exhaust(8) via heat exchanger(23) in case the temperature is warmer than that of the air coming from the storage. Fuel(11) is injected in gas turbine(10) where it burns cleanly at optimum rpm and exhaust gasses go via reservoir(5) and heat exchanger(9) to preheat incoming air(21) to the exhaust(14) possibly with added catalyser. During acceleration more power is needed and computer controlled switch(16) temporarily sends power from generator and battery both to the wheel motor. Clutch(12) can connect gas turbine and air motor to the generator separately or at the same time for extra power. Valves(20) of the air system are closed if no power is needed from the air motor, keeping the system under pressure to be ready for immediate power on demand. The liquid or cold pressed air in tank(1) is heated by copper wire(26) operated by switch(24) so that heat from the atmosphere is extracted by plate(22) and stored in tank(1). Heat plate(22) can be electrically heated(27) to prevent freezing. During fuelling of liquid air, batteries are charged automatically and heaters(28) bring the reservoirs up to high temperatures. If solar energy is abundant but can't be further stored in the reservoir, it can also heat up(29) tank(1).

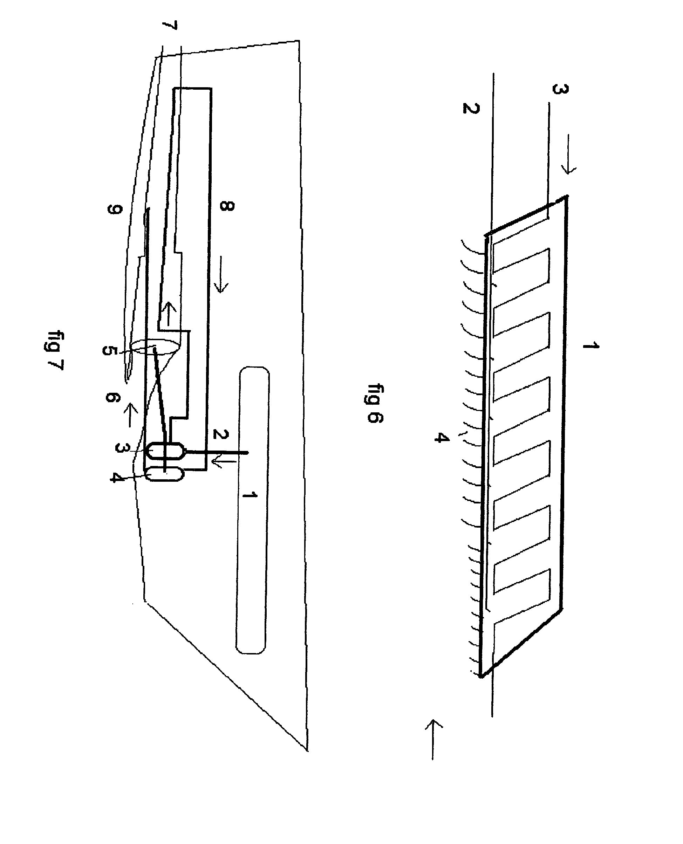

Heat exchanger under the vehicle (fig6) has a surface(1) that is kept cold either by contact(2) with the cold air storage or by a tube(3) with cold air that passes along the surface. Exchange surface can be increased by copper wires(4) through which ambient air passes.

The AGE Motor© can also be used perfectly on ships(fig7) as they have to carry a lot of heavy fuel. Air is very light and an air motor is very light and cheap; important advantages for a ship that thus gets less resistance and costs. Also a great part of the energy that a ship needs can be taken out of the water. The high pressure air drives a turbine that turns an impeller of a jet and cold expanded air flows past the water of 12° C so that the air heats up and can drive another turbine. This way energy can be taken out of the water and doesn't need to be carried on board as opposite to the fuel engine that supplies energy to the cooling water of the river and as a matter of fact dumps energy during sailing. Transportation means with an AGE Motor© take energy out of the water and atmosphere instead of dumping it. High pressured(500bar) air can be stored(1) and can go through a tube(2) to an air motor(3) that drives an impeller(5). Water is taken in through opening(6) and is pressured by the impeller to end into a jet(7) that pushes the ship forward. The water heats the cold expanded air from air motor(3) which now goes(8) at high pressure into air motor(4) that also drives the impeller. This cycle can be repeated several times to use the air and heat optimally after which the air ends ice cold in the cooled(4° C) jet to further cool it down causing the water to expand so as to gain even more pressure. The injection(9) of pressed air into a jet gives a lot of extra turbulence and power as well. This construction can also be complemented by solar energy collection, liquid air energy storage, ambient heat or a gas turbine with like that on vehicles.

## Claims

1. A geothermal power system containing a generator, heat exchanger, turbine, gas, expander, pump, condensers, binary circuit, storage and electricity distribution facilities, wherein an agent with very low boiling point liked air, nitrogen, methane, oxygen, etc. is pumped under pressure and below its critical temperature into a low grade geothermal area able to hold gas at pressures similar to those found in natural oil and gas wells, containing similar but gaseous agent at very high pressure. Because of the high pressure and temperature differences electricity is easily generated upon retrieval of said agent.

2. An energy system containing a generator, turbine, gas, pump, storage, distribution facilities, a closed circuit gas system with a part that passes a low grade heat area and another part that can exchange absorbed heat from said area into effective power, wherein an agent with low boiling point like air, nitrogen, methane, oxygen, etc, is pumped below its critical temperature into the low grade heat area where it is highly pressurised due to the great temperature difference after which it' 11 exchange absorbed heat into effective power and while expanding becomes liquid to be pumped back again.

3. A system according to claim 1 or 2, wherein the injected gas is being transported to said area via an insulated tube which enters into a less and/or non insulated tube that passes through an oil layer underneath the area to enter said area at a relative distant point from where the gas returns.

4. A system according to claim 1,2 or 3 or a combination thereof, wherein the energy extracted from the gas powers, directly or through a binary circuit, a turbine that is connected to a generator generating electricity.

5. A system according to claim 4, wherein storage facilities are used for liquid gas for extra peak power.

6. A system according to claim 4, wherein said area or tube system is under comparable pressure to that of natural oil or gas fields.

7. A system according to claim 4, wherein heat is being exchanged in a binary cycle of heat exchangers and possible condensers with different temperatures, volume and pressure.

8. A system according to claim 4, wherein part of the electricity is used to generate high pressure and heat that can be stored on the spot or directly used.

9. Means to inject gas under pressure in a tube system or geothermic area, retrieve it, extract energy from it and supply said energy to the grid, heat exchanger, local station, end user, compressor, etc.

10. A system according to claim 4, wherein said agent can collect low grade energy whether solar, geothermal, heat from ambient air, heat from a body of water or any combination thereof.

11. A energy system for means of transportation at least partly powered by an air motor, wherein installed a gas storage tank that can contain cold liquid gas as well as highly compressed gas or mixture of gasses.

12. An energy system for means of transportation at least partly powered by an air motor, wherein a thermal solar collector extracts and stores light energy in day time and ambient heat at night using low temperatures in the air tank.

13. An energy system for a means of transportation at least partly powered by an air motor, wherein an electromotor in wheel, which is powered directly or via a battery by a generator which is at least partly driven by the air motor, causes the forward thrust or regenerative braking of said means of transportation.

14. An energy system for a means of transportation at least partly powered by an air motor, wherein a heat exchanger under or at the sides of said means of transportation can extract heat day and night from ambient air using low temperatures in the air tank.

15. The heat exchanger of claim 14, wherein heat can be extracted either by connection with a cold storage reservoir or by cold air passing its surface.

16. An energy system for a means of transportation at least partly powered by an air motor, wherein the heat storage can also be heated electrically or by induction.

17. An energy system for a means of transportation at least partly powered by an air motor, wherein surplus of low grade heat coming into the cold air storage causes pressures above desirable level that are then discharged via the air motor and generator that power an electrical heater which increases temperatures in the heat storage.

18. An energy system for a means of transportation at least partly powered by an air motor, wherein a heat storage reservoir can be heated by solar energy directly or via a heat pump.

19. An energy system for a means of transportation at least partly powered by an air motor, wherein a fuel engine also drives the generator and supplies its waste heat to a heat storage reservoir for CPH during operation of the air motor.

20. An energy system for a means of transportation at least partly powered by an air motor, wherein a clutch connects an air motor and fuel engine in turn or together to a generator.

21. An energy system for a means of transportation at least partly powered by an air motor, wherein cold expanded air from an air motor is warmed by ambient air blowing through a radiator through which the cold air passes.

22. An energy system for a means of transportation at least partly powered by an air motor, wherein a compressor on board can fill the air tank, possibly from the grid, and supply heat to a reservoir.

23. An energy system for a means of transportation at least partly powered by an air motor, wherein a computer controls the amount of power the generator feeds the battery, so that always optimum heat and air pressure utilisation occurs.

24. An energy system for a means of transportation at least partly powered by an air motor, wherein valves in the air system shut if no air power is required, thus keeping the system under pressure.

25. An energy system for a means of transportation at least partly powered by an air motor, wherein a heat storage reservoir on board said means of transportation can be warmed by solar energy, electrically, induction or CHP from a fuel engine.

26. An energy system for vessels at least partly powered by an air motor, wherein compressed or liquid air powers a propeller, impeller or jet(motor) that causes the forward thrust of said vessel.

27. The system of claim 25, wherein compressed air after it has given work to an air motor and has expanded and cooled down, is heated and pressured passing via tubes the water or air surrounding the vessel to then enter and power the next air motor.

28. The system of claim 25, wherein the compressed air ends cold and expanded in the jet and mixes with the water before it exits the jet.

29. A means of transportation having an air motor and compressed or liquid air storage, wherein a gas turbine is fed ambient air preheated by exhaust gases after they've given part of their energy to a heat storage reservoir.

30. An energy system using liquid gas as an agent to generate, store and convert sustainable energy.

31. A power conversion plant in which air is compressed and separated into heat, 02, N2, CO2, etc, wherein the component are used for air filtration and power generation at a different time.

32. An energy system using liquid gas or compressed air as an agent for generation, storage and conversion of energy to supply effective power while clearing the atmosphere, called Anti Greenhouse Energy and the word "AGE Technology" wherein "AGE" stands for Anti Greenhouse Energy and "AGE Technology" relates to application of the technology comprising elements connected to above claims.
